# EUROPEAN PATENT SPECIFICATION

(11) **EP 1 907 219 B1**
(45) Date of publication and mention of the grant of the patent: **03.09.2014**
(21) Application number: 06800349.0
(22) Date of filing: 26.07.2006
(51) Int. Cl.: B42D 15/00

(54) **A METHOD FOR CREATING A WATERMARK-LIKE IMAGE AND A WATERMARK-LIKE IMAGE**
HERSTELLUNGSVERFAHREN FÜR EIN WASSERZEICHENBILD UND WASSERZEICHENBILD
PROCEDE DE CREATION D'UNE IMAGE A FILIGRANE ET ELEMENT D'UNE CARTE EN PLASTIC

(30) Priority: 28.07.2005 US 193230
(43) Date of publication of application: 09.04.2008
(73) Proprietor: Document Security Systems, Inc., Rochester NY 14614 (US)
(72) Inventor: CAULLEY, Michael, Patrick, Redwood City, CA 94062 (US); LUONG, Phieu, San Francisco, CA 94132 (US)
(74) Representative: Miller, James Lionel Woolverton
(86) International application number: PCT/US2006/028983
(87) International publication number: WO 2007/016148

(56) References cited:
- WO-A-2005/053968
- US-A1- 2005 084 693

## Description

### FIELD OF THE INVENTION

The present invention relates to an anti-counterfeiting feature having a watermark-like appearance in a laminated card, where such a card is used as an identification card, credential, access card, transaction card, ticket, credit card, cash card, debit card, etc.

### BACKGROUND OF THE INVENTION

Identification and transaction cards are typically made from a stack of laminated polyvinyl chloride (PVC) layers. These cards may include one or more security (i.e., anti-counterfeiting) features. The anti-counterfeiting features are generally a form of print (right-reading or reverse reading) or applied matter (i.e., a holographic foil) placed on a layer or an image embossed or debossed, and either single or dual-die stamped into a layer. Identification or transaction cards may include one or more of the following methods.

Embossing produces an image (graphic or alphanumeric text) that is raised above the surface of the layer. With debossing, the image is pressed into the layer and appears below the surface. Blind embossing and blind debossing are the processes of embossing or debossing, respectively, an image that is the same color as the layer.

Another method is to place specially marked aluminum foils (holograms) on an outer layer. One variation laminates (using heat and pressure) the specially marked aluminum foil in place while another variation uses adhesive to attach the specially marked aluminum foil to the plastic layer. Adhesive is typically required where printing is underneath the foil.

Another method is the use of Multi-Layered Film to create Hot-Stamping Foil. Generally, it starts with a 20-Micron Polyester carrier coated with a waxy release layer, then a special coating with the top coating layer to impart resistance to whatever hostile environment the foil will be exposed to. This coating protects everything beneath it. Beneath the top coating is the embossable coating that receives the embossing of image. The material is then metallized by vacuum deposition of aluminum. Hot-stamping the aluminum foil can deform (deboss) the plastic layer, although that is not the normal intent as the foil color is also diminished by the heat and pressure. Clear holograms lack the metal foil.

Another method is using a holographic pouch to hold the identification or transaction card. First, a hologram image is embossed on transparent hologram security laminate. Then the identification or transaction card is sealed inside the pouch. A weak-intensity holographic image indicates solvent tampering. A destroyed image indicates alteration. An absent image indicates a counterfeit card. An optional destruct feature occurs during an attempt to remove the laminate - even if the counterfeiter tries to reposition the laminate on another card or in its original place.

Print based anti-counterfeiting methods rely on the difficulty of detecting the print, reproducing the print, or a combination of both. Ultraviolet inks are invisible to the unaided eye and are only visible only under ultraviolet light. Microfine printing is very small, on the order of 2 to 4 points. Guilloche patterns are complex interwoven lines based on mathematical formula that are difficult to reproduce. Color-shifting inks appear as different colors according to angle of reflected lighting the viewer perceives. DNA Matrix security inks contain ascertainable quantities of DNA in the ink, allowing indisputable verification of the origin of the ink.

Generally the print methods are directly on the outer plastic layer. However, to avoid wear and counterfeiting of the print, a thin clear layer is often laminated or glued over the print layer.

A problem with these methods is that the anti-counterfeit feature lies on an upper layer of the card that is easier to access and transfer for counterfeiting purposes. Also the feature is subject to environmental degradation.

Embedded security features, such as an embedded hologram, refer to placement of the security feature on a layer of plastic, after which another layer of plastic, either clear or colored, is placed over the layer containing the security feature.

Efforts to embed a hologram on an inner layer have met with limited success. Too much heat during lamination will dull the holographic image, and the hologram looses its sparkle. Conversely, lowering the heat in lamination to save the hologram is usually not hot enough to bond the plastic layers together. The plastic must be heated enough to stick all the layers together but not dull the sparkle of the hologram.

While watermarks in paper help lessen counterfeit opportunity in paper records, similar technology in plastic laminate layers has been elusive. Past efforts to place a counterfeit secure watermark-like feature in plastic inner layers were defeated by the temperature and pressure exerted over time on the inner layers by subsequent lamination processes that marred the watermark-like image.

Recent advancements in plastics has yielded a microporous silica-filled polyethylene (polyolefin) layer, such as one known as TESLIN® by PPG Industries, Inc. of Pittsburgh, PA. In its various compositions, TESLIN® is printable by both inkjet and laser printers; and retains the printing under lamination. Consequently, TESLIN® is popular in the identification and transaction card industry. However, due to the low cost of TESLIN®, and the ease and low cost of both reproduction and printing, printed TESLIN® cards are subject to counterfeiting. Another method is needed to deter and detect counterfeit identification and transaction cards.

US-A-2005/0084693 discloses a polyester laminate for an identification document in which a polyester material is bonded directly to a printed core layer of TESLIN® or polyester through a roll to roll or plate press process. Variable and/or fixed information is printed on the core layer before the laminate is bonded.

WO-A-2005/053968 discloses a multi-layer security element comprising a metal layer into which marks are introduced in the form of patterns, letters, numbers and/or images by means of a laser beam. The marks in the metal layer are disposed between two translucent coatings.

The present invention overcomes these past failures to create a plastic counterfeit-secure watermark-like image on an identification or transaction card.

### SUMMARY OF THE INVENTION

Aspects of the invention are defined in the independent claims 1 and 11. Further, optional features are set out in the depending claims.

Embodiments of the present invention provides for the appearance of a watermark-like image in laminated plastic cards. The technology behind this watermark-like image has the advantage of being virtually counterfeit-proof since the watermark-like image is integrated into the base layers of the card, yet detectably visible for deterrence and detection of counterfeiting efforts. The present invention uses a microporous silica-filled polyethylene layer (i.e., TESLIN® by PPG Industries, Inc. of Pittsburgh, Pa) that may be deformed (e.g.., stamped by embossing or debossing) creating an image that appears like a watermark through subsequently laminated layers.

Unlike PVC, the microporous silica-filled polyethylene (a.k.a. polyolefin) layer may be embossed or debossed to create an image and subsequently laminated under defined parameters without marring the image on the polyolefin layer. Furthermore, the image may be created with stamped holographic foil by either a cold or hot stamp process.

### BRIEF DESCRIPTION OF THE DRAWINGS

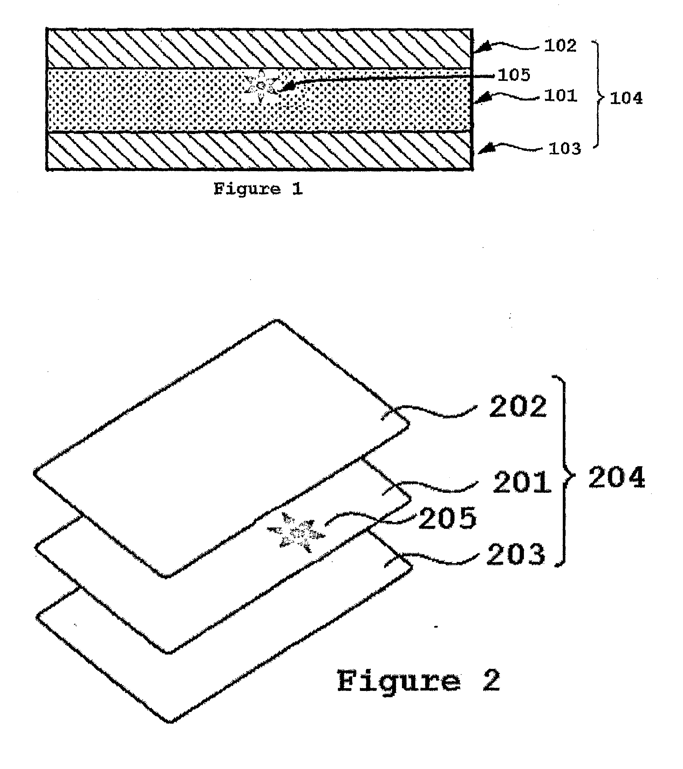

Figure 1 shows a cross-sectional view of one embodiment of the present invention showing the watermark-like image as if embossed, debossed or stamped with holographic foil on a microporous silica-filled polyethylene (i.e., Teslin®) layer between two white plastic layers.
Figure 2 shows an exploded perspective view of the preferred embodiment of the present invention showing the watermark-like image as if embossed, debossed, or stamped with holographic foil on a microporous silica-filled polyethylene layer between the variably opaque white laminated plastic layers on either side.

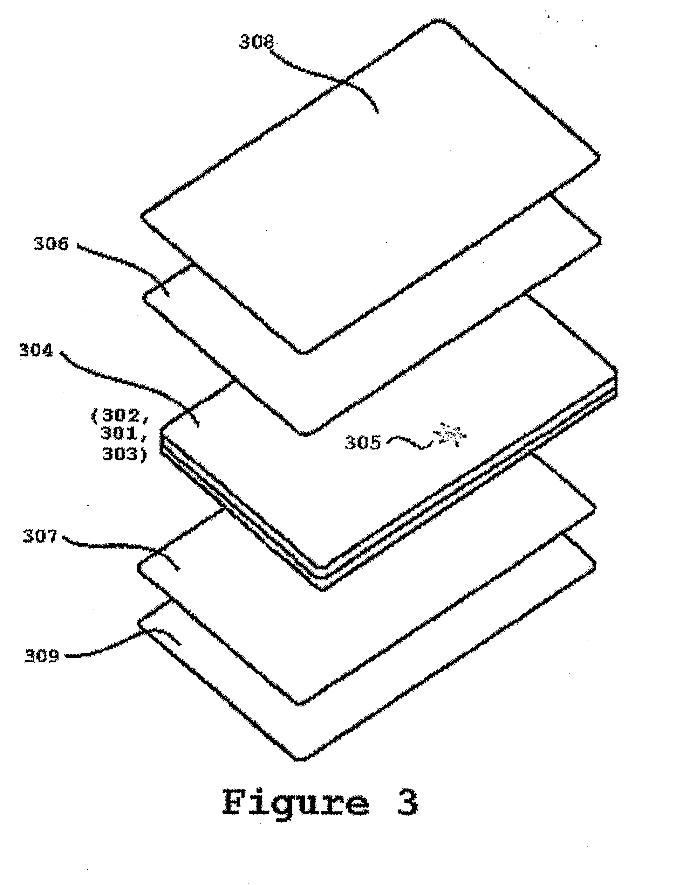

Figure 3 shows an exploded perspective view of the present invention showing the watermark-like image as if embossed, debossed or stamped with holographic foil on a microporous silica-filled polyethylene layer and showing through the successive laminated layers on either side of the watermark-like image.

### DETAILED DESCRIPTION AND PREFERRED EMBODIMENTS

Reference will now be made to embodiments of the present invention, examples of which are illustrated in the accompanying drawings. These drawings illustrate the present invention and the various steps of the process invention intended to form the desired product and the appearance of the intermediate pieces formed during the process.

While certain embodiments of the present invention might prefer an overt appearance of the image for counterfeiting deterrence, other embodiments of the watermark-like image would be covert to make detection of the watermark-like image to counterfeiters more difficult. The visibility or covertness of the watermark-image is determined by use of plastic layers in different configurations of opacity and thickness.

In the preferred embodiment, the present invention embosses or debosses the watermark-mark image on a microporous silica-filled polyethylene layer that is then laminated between two variably opaque white plastic layers to create a laminate stack. Alternatively, a holographic foil might be stamped onto the microporous silica-filled polyethylene layer in lieu of an embossed or debossed image.

This laminate stack is then further laminated within subsequent variably opaque clear plastic layers. Layers of clear plastic may be placed over the variably opaque layers for wear protection. The watermark-like image appears covertly in the variably opaque white plastic layers behind the outer variably printed layers.

Figure 1 shows a cross-sectional view of the present counterfeit-secure feature invention **104** showing the three plastic layers **101, 102,** and **103.** The watermark-like image **105** is represented here by a single graphic on the microporous silica-filled polyethylene layer, **101** as laminated between the two variably opaque white plastic layers **102** and **103.**

Figure 2 shows an exploded perspective view of the present counterfeit-secure feature invention **204.** The watermark-like image **205** shows as if embossed, debossed, or stamped with holographic foil on the microporous silica-filled polyethylene layer, **201.** The microporous silica-filled polyethylene layer **201** containing the watermark-like image **205** is then laminated between the two variably opaque white plastic layers **202** and **203.**

Figure 3 shows an exploded perspective view of the present counterfeit-secure feature invention **304** readied for use. The watermark-like image **305** shows as if embossed, debossed, or stamped with holographic foil on the microporous silica-filled polyethylene layer **301.** The microporous silica-filled polyethylene layer **301** containing the watermark-like image **305** is then laminated between two variably opaque white plastic layers **302** and **303.** Layers **306** and **307** are subsequently laminated over layers **302** and **303** respectively. Clear plastic layers **308** and **309** are then laminated over layers **306** and **307** respectively to provide additional counterfeiting deterrence and environmental protection for the sub-layers.

In lieu of the being the center layer as shown, the microporous silica-filled polyethylene layer **301** containing the watermark-like image **305** may be eccentrically laminated into the subsequent laminate layers. Layer **302** or **303** is then absent and the watermark-like image **305** lies closer to laminate layer **306** or **307** than to the other laminate layer.

Furthermore, layers **302** or **303** may be clear or non-white to change the opacity to the watermark. Similarly, layers **306** or **307** may be substantially clear or variably opaque. Additionally, layers **306** or **307** may have custom printing and possibly other counterfeit-secure features.

In yet another embodiment, a build-up of substantially clear layers, i.e., **302, 303, 306, 307, 308** and **309,** plus others, in lieu of the variably opaque white plastic layers would differently mask the watermark-image by the cumulative opacity of the substantially clear layers.

The watermark-like image **105, 205** and **305** in the drawings is represented by a single graphic image. In use the watermark-like image may be one or more graphic images, text, or a combination of graphic images and text. Furthermore, those skilled in the art will appreciate that the simple geometric shapes for the plastic layers are merely representative for simplicity and clarity in the drawings. In fact, a wide variety of complexity in configuration in layers and sizes can be successfully created with the present invention.

As used in this patent, the term "variably opaque" refers to the opacity of different stocks of laminate layers. The variably opaque layers may be transparent, substantially clear, colored plastic of different colors for opacity, or printed for opacity.

Typically, but not required of the present invention, is that the variably opaque plastic layers, regardless of clarity or color, are composed of polyvinyl chloride or a polyvinyl chloride-polyester blend. Those skilled in the art will appreciate that other materials commonly used for a laminated card are also suitable. These would not exclusively include plastics such as polyester, polyethylene (and its blends and variations), polycarbonate, acrylonitrile-butadiene-styrene and polyethylene tetraphtalate.

Those skilled in the art will further appreciate that while successful lamination of the watermark-like image feature requires specific parameters of time, pressure, and temperature, the precise values will vary according to the material, process, and image. Cold embossing of TESLIN® is not generally as effective as thermal embossing. Temperatures in the range of 90°-130°C or higher may be required. Dwell times and pressure requirements will be a function of the graphics, the degree of embossing, debossing or stamping desired, and the hardware.

In addition, those skilled in the art will appreciate that the dual anti-counterterting advantage of an embedded watermark-like image feature. First, by being embedded, the watermark-like image is much less accessible to tampering, and any tampering is more likely to destroy the card, or be evident to the naked eye. Second, by virtue of being embossed, debossed or stamped to an inner plastic layer, even high resolution copying cannot accurately reproduce the image to its true watermark-like appearance.

Furthermore, those skilled in the art will appreciate that compound watermark-like image layers with one or more images on each layer are possible by the bonding of multiple layers of microporous silica-filled polyethylene layers to other layers of microporous silica-filled polyethylene. Such bonding is possible with adhesive or layers of other plastics as discussed above interposed between the multiple layers of microporous silica-filled polyethylene layers.

## Claims

1. A method for creating a watermark-like image feature (104) in a plastic card comprising:
deforming a re-form-resistant plastic layer (101) to create a watermark-like image layer, wherein said deforming comprises embossing or debossing; and
bonding said re-form resistant plastic layer (101) to at least one plastic layer (102).

2. The method according to claim 1 wherein said re-form-resistant plastic layer (101) comprises microporous silicon-filled polyethylene.

3. The method according to claim 1 wherein said embossing or debossing further comprises using heat.

4. The method according to claim 1 wherein said deforming comprises hot-stamping.

5. The method according to claim 4 wherein said hot-stamping comprises the use of a metal foil.

6. The method according to claim 4 wherein said hot-stamping comprises the use of a non-metal foil.

7. The method according to claim 1 wherein said bonding comprises lamination.

8. The method according to claim 7 wherein said lamination does not alter the shape or clarity of said image (105).

9. The method according to claim 1 wherein said at least one plastic layer (102) is clear.

10. The method according to claim 1 wherein said at least one plastic layer (102) is colored or printed for opacity.

11. A watermark-like image feature (104) in a plastic card comprising:
a watermark-like image (105) formed in a re-form-resistant plastic layer (101); and
at least one plastic layer (102) bonded to said re-form-resistant plastic layer (101); wherein said watermark-like image (105) is formed using an embossing or debossing process.

12. The watermark-like image feature (104) according to claim 11 wherein said re-form-resistant plastic layer (101) comprises microporous silicon-filled polyethylene.

13. The watermark-like image feature (104) according to claim 11 wherein said watermark-like image (105) is embossed or debossed using heat.

14. The watermark-like image feature (104) according to claim 11 wherein said at least one plastic layer (102) is selected from the group consisting of polyvinyl chloride, microporous silica-filled polyethylene, polyethylene, polycarbonate, acrylonitrile -butadiene-styrene, polyethylene tetraphthalate, and polyester.

15. The watermark-like image feature (104) according to claim 11 wherein said at least one plastic layer (102) is colored or printed for opacity.

16. The watermark-like image feature (104) according to claim 11 wherein said at least one plastic layer (102) is clear.

17. The watermark-like image feature (104) according to claim 11 wherein said at least one plastic layer (102) is bonded to said re-form-resistant plastic layer (101) using a lamination process.

18. The watermark-like image feature (104) according to claim 17 wherein said lamination does not alter the shape or clarity of said watermark-like image (105).

19. The watermark-like image feature (104) according to claim 11 further comprising a second plastic layer (303), said second plastic layer (303) bonded to said at least one plastic layer (302).

20. The watermark-like image feature (104) according to claim 19 wherein said second plastic layer (303) is bonded to said at least one plastic layer (302) using lamination.

21. The watermark-like image feature (104) according to claim 20 wherein said lamination does not alter the shape or clarity of said watermark-like image (305).

22. The watermark-like image feature (104) according to claim 11 wherein said watermark-like image (305) is formed using a hot-stamping process.

## Patentansprüche

1. Verfahren zum Erzeugen eines wasserzeichenähnlichen Bildmerkmals (104) in einer Kunststoffkarte, umfassend:
Verformen einer umformbeständigen Kunststoffschicht (101), um eine wasserzeichenähnliche Bildschicht zu erzeugen, wobei das Verformen Prägen oder Tiefprägen umfasst; und
Haften der umformbeständigen Kunststoffschicht (101) an mindestens eine Kunststoffschicht (102).

2. Verfahren nach Anspruch 1, wobei die umformbeständige Kunststoffschicht (101) mikroporöses siliciumgefülltes Polyethylen umfasst.

3. Verfahren nach Anspruch 1, wobei das Prägen oder Tiefprägen ferner das Verwenden von Wärme umfasst.

4. Verfahren nach Anspruch 1, wobei das Verformen Heißprägen umfasst.

5. Verfahren nach Anspruch 4, wobei das Heißprägen die Verwendung einer Metallfolie umfasst.

6. Verfahren nach Anspruch 4, wobei das Heißprägen die Verwendung einer Nichtmetallfolie umfasst.

7. Verfahren nach Anspruch 1, wobei das Haften Laminierung umfasst.

8. Verfahren nach Anspruch 7, wobei die Laminierung die Form oder Klarheit des Bildes (105) nicht verändert.

9. Verfahren nach Anspruch 1, wobei die mindestens eine Kunststoffschicht (102) klar ist.

10. Verfahren nach Anspruch 1, wobei die mindestens eine Kunststoffschicht (102) für Opazität eingefärbt oder bedruckt ist.

11. Wasserzeichenähnliches Bildmerkmal (104) in einer Kunststoffkarte, umfassend:
ein wasserzeichenähnliches Bild (105), das in einer umformbeständigen Kunststoffschicht (101) gebildet ist; und
mindestens eine Kunststoffschicht (102), die an die umformbeständige Kunststoffschicht (101) geklebt ist; wobei das wasserzeichenähnliche Bild (105) durch Verwenden eines Präge- oder Tiefprägeprozesses gebildet wird.

12. Wasserzeichenähnliches Bildmerkmal (104) nach Anspruch 11, wobei die umformbeständige Kunststoffschicht (101) mikroporöses siliciumgefülltes Polyethylen umfasst.

13. Wasserzeichenähnliches Bildmerkmal (104) nach Anspruch 11, wobei das wasserzeichenähnliche Bild (105) unter Verwendung von Wärme geprägt oder tiefgeprägt wird.

14. Wasserzeichenähnliches Bildmerkmal (104) nach Anspruch 11, wobei die mindestens eine Kunststoffschicht (102) aus der Gruppe bestehend aus Polyvinylchlorid, mit Siliciumdioxid gefülltem Polyethylen, Polyethylen, Polycarbonat, Acrylnitril-Butadien-Styrol, Polyethylentetraphthalat und Polyester ausgewählt wird.

15. Wasserzeichenähnliches Bildmerkmal (104) nach Anspruch 11, wobei die mindestens eine Kunststoffschicht (102) für Opazität eingefärbt oder bedruckt ist.

16. Wasserzeichenähnliches Bildmerkmal (104) nach Anspruch 11, wobei die mindestens eine Kunststoffschicht (102) klar ist.

17. Wasserzeichenähnliches Bildmerkmal (104) nach Anspruch 11, wobei die mindestens eine Kunststoffschicht (102) an die umformbeständige Kunststoffschicht (101) unter Verwendung eines Laminierungsprozesses geklebt wird.

18. Wasserzeichenähnliches Bildmerkmal (104) nach Anspruch 17, wobei die Laminierung die Form oder Klarheit des wasserzeichenähnlichen Bildes (105) nicht verändert.

19. Wasserzeichenähnliches Bildmerkmal (104) nach Anspruch 11, das ferner eine zweite Kunststoffschicht (303) umfasst, wobei die zweite Kunststoffschicht (303) an die mindestens eine Kunststoffschicht (302) geklebt ist.

20. Wasserzeichenähnliches Bildmerkmal (104) nach Anspruch 19, wobei die zweite Kunststoffschicht (303) unter Verwendung von Laminierung an die mindestens eine Kunststoffschicht (302) geklebt wird.

21. Wasserzeichenähnliches Bildmerkmal (104) nach Anspruch 20, wobei die Laminierung die Form oder Klarheit des wasserzeichenähnlichen Bildes (305) nicht verändert.

22. Wasserzeichenähnliches Bildmerkmal (104) nach Anspruch 11, wobei das wasserzeichenähnliche Bild (305) unter Verwendung eines Heißprägeprozesses gebildet wird.

## Revendications

1. Procédé de création d'une caractéristique d'image de type filigrane (104) dans une carte en plastique, comprenant :
la déformation d'une couche de plastique résistant au reformage (101) pour créer une couche d'image de type filigrane, ladite déformation comprenant un marquage en relief ou en creux ; et
la liaison de ladite couche de plastique résistant au reformage (101) à au moins une couche de plastique (102).

2. Procédé selon la revendication 1, dans lequel ladite couche de plastique résistant au reformage (101) comprend du polyéthylène chargé en silice microporeux.

3. Procédé selon la revendication 1, dans lequel ledit marquage en relief ou en creux comprend en outre l'utilisation de chaleur.

4. Procédé selon la revendication 1, dans lequel ladite déformation comprend un estampage à chaud.

5. Procédé selon la revendication 4, dans lequel ledit estampage à chaud comprend l'utilisation d'une feuille métallique.

6. Procédé selon la revendication 4, dans lequel ledit estampage à chaud comprend l'utilisation d'une feuille non métallique.

7. Procédé selon la revendication 1, dans lequel ladite liaison comprend une stratification.

8. Procédé selon la revendication 7, dans lequel ladite stratification n'altère pas la forme ni la clarté de ladite image (105).

9. Procédé selon la revendication 1, dans lequel ladite au moins une couche de plastique (102) est transparente.

10. Procédé selon la revendication 1, dans lequel ladite au moins une couche de plastique (102) est colorée ou imprimée pour opacité.

11. Caractéristique d'image de type filigrane (104) dans une carte en plastique comprenant :
une image de type filigrane (105) formée dans une couche de plastique résistant au reformage (101) ; et
au moins une couche de plastique (102) liée à ladite couche de plastique résistant au reformage (101) ; ladite image de type filigrane (105) étant formée au moyen d'un procédé de marquage en relief ou en creux.

12. Caractéristique d'image de type filigrane (104) selon la revendication 11, dans laquelle ladite couche de plastique résistant au reformage (101) comprend un polyéthylène chargé de silice microporeux.

13. Caractéristique d'image de type filigrane (104) selon la revendication 11, dans laquelle ladite image de type filigrane (105) est marquée en relief ou en creux au moyen de chaleur.

14. Caractéristique d'image de type filigrane (104) selon la revendication 11, dans laquelle ladite au moins une couche de plastique (102) est choisie dans le groupe constitué de chlorure de polyvinyle, de polyéthylène chargé en silice microporeux, de polyéthylène, de polycarbonate, d'acrylonitrile-butadiène-styrène, de polyéthylène tétraphtalate et de polyester.

15. Caractéristique d'image de type filigrane (104) selon la revendication 11, dans laquelle ladite au moins une couche de plastique (102) est colorée ou imprimée pour opacité.

16. Caractéristique d'image de type filigrane (104) selon la revendication 11, dans laquelle ladite au moins une couche de plastique (102) est transparente.

17. Caractéristique d'image de type filigrane (104) selon la revendication 11, dans laquelle ladite au moins une couche de plastique (102) est liée à ladite couche de plastique résistant au reformage (101) au moyen d'un procédé de stratification.

18. Caractéristique d'image de type filigrane (104) selon la revendication 17, dans laquelle ladite stratification n'altère pas la forme ni la clarté de ladite image de type filigrane (105).

19. Caractéristique d'image de type filigrane (104) selon la revendication 11, comprenant en outre une seconde couche de plastique (303), ladite seconde couche de plastique (303) étant liée à ladite au moins une couche de plastique (302).

20. Caractéristique d'image de type filigrane (104) selon la revendication 19, dans laquelle ladite seconde couche de plastique (303) est liée à ladite au moins une couche de plastique (302) par stratification.

21. Caractéristique d'image de type filigrane (104) selon la revendication 20, dans laquelle ladite stratification n'altère pas la forme ni la clarté de ladite image de type filigrane (305).

22. Caractéristique d'image de type filigrane (104) selon la revendication 11, dans laquelle ladite image de type filigrane (305) est formée au moyen d'un procédé d'estampage à chaud.
